# EUROPÄISCHE PATENTSCHRIFT

(11) **EP 2 557 098 B1**
(45) Veröffentlichungstag und Bekanntmachung des Hinweises auf die Patenterteilung: **01.02.2017**
(21) Anmeldenummer: 12178189.2
(22) Anmeldetag: 27.07.2012
(51) Int. Cl.: C08F 290/06, C08F 290/14, B32B 27/08, B44C 1/22, G09F 3/02, C09D 151/08, C08J 5/18

(54) **Temperaturbeständige laserbeschriftbare Folie**
Temperature-resistant laser-inscribable film
Feuille inscriptible au laser à température constante

(30) Priorität: 12.08.2011 DE 102011080883
(43) Veröffentlichungstag der Anmeldung: 13.02.2013
(73) Patentinhaber: tesa SE, 22848 Norderstedt (DE)
(72) Erfinder: Siebert, Dr. Michael, 22869 Schenefeld (DE); Ellinger, Jan, 20257 Hamburg (DE); Keite-Telgenbüscher, Dr. Klaus, 22529 Hamburg (DE); Zöllner, Dr. Stephan, 21244 Buchholz /Nordheide (DE); Preuß, Philipp, 22851 Norderstedt (DE)

(56) Entgegenhaltungen:
- EP-A1- 0 939 109
- WO-A1-98/50317
- WO-A1-03/018700
- DE-A1- 19 752 224

## Beschreibung

Die vorliegende Erfindung betrifft eine laserbeschriftbare Folie, umfassend eine Kontrastschicht und eine oberhalb der Kontrastschicht angeordnete Gravierschicht, sowie aus der Folie hergestellte laserbeschriftbare Etiketten. Die vorliegende Erfindung betrifft ferner ein Verfahren zur Herstellung einer laserbeschriftbaren Folie.

Die Kennzeichnung von Gegenständen gewinnt zunehmend an Bedeutung. So werden zum Beispiel in der Automobilindustrie herkömmliche bedruckte Etiketten durch laserbeschriftbare Etiketten ersetzt. Mit Hilfe laserbeschriftbarer Etiketten werden Informationen und Hinweise wie Reifendruck oder Treibstoffart auf verschiedenen Bauteilen von Kraftfahrzeugen platziert. Neben solchen Hinweisen können laserbeschriftbare Etiketten auch Sicherheitsinformationen wie Fahrgestell- und Fahrzeugidentifikationsnummern enthalten. Entsprechende Etiketten erlauben im Falle eines Diebstahls oder Unfalls einen Rückschluss auf Fahrzeug und Fertigungsstufen bei seiner Herstellung. Der Einsatz besonderer Sicherheitsmerkmale wie Hologrammen, bleibender UV-Abdrücke (foot print) auf dem Substrat, auf dem das Etikett verklebt war, und gezielte Materialauswahl der laserbeschriftbaren Etiketten dienen dazu, einerseits eine Nachahmung des Materials zu erschweren und andererseits Manipulationsversuche anzuzeigen.

Aus dem Stand der Technik sind laserbeschriftbare Etiketten bekannt, die schnell beschrieben werden können, einen hohen Kontrast eingeschriebener Zeichen erlauben und eine hohe Temperaturbeständigkeit über kurze Zeiträume gewährleisten. DE 81 30 861 U1 offenbart mehrschichtige Etiketten, die eine dünne und eine dicke Lackschicht enthalten und über kurze Zeiträume hohen Temperaturen standhalten. DE 100 48 665 A1 und DE 101 42 638 A1 beschreiben laserbeschriftbare Etiketten, die ebenfalls über kurze Zeiträume hohen Temperaturen standhalten.

Im Falle länger andauernder Temperatureinflüsse kommt es bei den Etiketten des Standes der Technik jedoch zu einem Zusammenziehen ("Schrumpf") einer oder mehrerer Schichten. Es besteht die Vermutung, dass dieses Zusammenziehen durch eine Veränderung der Flächenausdehnung einer oder mehrerer Schichten hervorgerufen wird. Das Zusammenziehen einer oder mehrerer Schichten innerhalb bekannter Etiketten äußert sich in einem Ablösen der Etiketten im Bereich ihrer Kanten. Dieses Ablösen stellt im Falle sensibler Daten wie Fahrgestellnummern für sich ein Sicherheitsproblem dar, da Etiketten möglicherweise unbeschädigt und rückstandsfrei vollständig entfernt werden könnten. Andererseits kann es durch das Zusammenziehen zu Spannungen innerhalb des Etiketts kommen, wenn sich das Ausdehnungsverhalten verschiedener Schichten innerhalb eines Etiketts bei steigender Temperatur unterschiedlich verhält oder chemische Prozesse zu einem Schrumpf innerhalb einer Schicht führen. Dies kann etwa durch Alterungsprozesse, etwa Vernetzungsreaktionen, hervorgerufen werden. Im Falle solcher Spannungen kommt es zu einer Rissbildung innerhalb der Etiketten, wodurch einerseits ästhetischen Ansprüchen nicht genügend Rechnung getragen wird, andererseits ein Manipulationsversuch fälschlicher Weise vermutet werden könnte.

Vor dem Hintergrund steigender Anforderungen an die Temperaturbeständigkeit laserbeschriftbarer Etiketten über längere Zeiträume besteht insofern ein Bedarf an verbesserten Folien, die als Ausgangsmaterial entsprechender laserbeschriftbarer Etiketten dienen. Sämtliche aus dem Stand der Technik bekannte laserbeschriftbare Etiketten und Folien erfüllen die steigenden Anforderungen an Manipulationssicherheit und hoher Temperaturbeständigkeit nur bedingt. Insbesondere bei hoher Temperatur kommt es bei den bekannten Etiketten zu einem Verlust der Dimensionsstabilität einer oder mehrerer Schichten, der sich in einem Zusammenziehen oder auch "Schrumpf" äußert, sowie zu einem damit verbundenen Kantenabheben der Etiketten, sowie zu einer Rissbildung.

Der vorliegenden Erfindung liegt insofern die Aufgabe zugrunde, verbesserte laserbeschriftbare Folien bereitzustellen, die die Probleme des Standes der Technik vermeiden und als Ausgangsmaterial zur Herstellung dimensionsstabiler laserbeschriftbarer Etiketten dienen. Gleichzeitig soll die chemische Beständigkeit im Vergleich zu Etiketten des Standes der Technik wenn möglich erhalten bleiben bzw. verbessert werden. Unter chemischer Beständigkeit ist in diesem Sinne z.B. die Beständigkeit gegenüber Kohlenwasserstoffen wie Treibstoffen für Kraftfahrzeuge und Lösungsmitteln zu verstehen, die mit den Etiketten möglicher Weise in Kontakt kommen könnten.

Die vorliegende Erfindung löst dieses Problem durch den Einsatz einer Kontrastschicht auf Basis einer gehärteten Acrylatlackzusammensetzung. Die gehärtete Acrylatlackzusammensetzung erfindungsgemäßer laserbeschriftbarer Folien basiert auf einer Zusammensetzung umfassend 30 bis 80 Gew.-% eines trifunktionellen Oligomers A, 0 bis 20 Gew.-% eines trifunktionellen Monomers B, 1 bis 30 Gew.-% eines difunktionellen Monomers C sowie 2 bis 40 Gew.-% eines farbgebenden Pigmentes. In einer bevorzugten Ausführungsform der vorliegenden Erfindung umfasst die Zusammensetzung, auf der die Acrylatlackzusammensetzung basiert, 50 bis 60 Gew.-%, bevorzugt 52 bis 58 Gew.-% des trifunktionellen Oligomers A, 5 bis 15 Gew.-%, bevorzugt 8 bis12 Gew.-% des trifunktionellen Monomers B sowie 5 bis 15 Gew.-%, bevorzugt 8 bis 12 Gew.-% des difunktionellen Monomers C. Die Menge des farbgebenden Pigmentes innerhalb der Acrylatlackzusammensetzungen bevorzugter Ausführungsformen hängt von der Art des verwendeten Materials ab. Im Falle von Ruß als farbgebendes Pigment sind beispielsweise 2 bis 7 Gew.-% bevorzugt, während im Falle von TiO₂ bevorzugt 15 bis 40 Gew.-%, besonders bevorzugt 22 bis 28 Gew.-% verwendet werden. Das trifunktionelle Oligomer A, das trifunktionelle Monomer B und das difunktionelle Monomer C werden im Folgenden auch als Komponente A, Komponente B bzw. Komponente C bezeichnet. Überraschender Weise wurde gefunden, dass Zusammensetzungen, die die Komponenten A, B und C sowie das farbgebende Pigment in der angegebenen Menge enthalten, besonders temperaturbeständige gehärtete Acrylatlackzusammensetzungen ergeben.

Die vorliegende Erfindung betrifft laserbeschriftbare Folien, umfassend eine Kontrastschicht auf Basis einer gehärteten Acrylatlackzusammensetzung und eine oberhalb der Kontrastschicht angeordnete Gravierschicht, wobei die gehärtete Acrylatlackzusammensetzung auf einer Zusammensetzung umfassend 30 bis 80 Gew.-% eines trifunktionellen Oligomers A, 0 bis 20 Gew.-% eines trifunktionellen Monomers B, 1 bis 30 Gew.-% eines difunktionellen Monomers C sowie 2 bis 40 Gew.-% eines farbgebenden Pigmentes basiert. In einer bevorzugten Ausführungsform der vorliegenden Erfindung umfasst die Zusammensetzung, auf der die Acrylatlackzusammensetzung basiert, 50 bis 60 Gew.-%, bevorzugt 52 bis 58 Gew.-% des trifunktionellen Oligomers A, 5 bis 15 Gew.-%, bevorzugt 8 bis12 Gew.-% des trifunktionellen Monomers B sowie 5 bis 15 Gew.-%, bevorzugt 8 bis 12 Gew.-% des difunktionellen Monomers C sowie 2 bis 40 Gew.-% des farbgebenden Pigmentes. In einer besonders bevorzugten Ausführungsform der Erfindung umfasst die Zusammensetzung, auf der die Acrylatlackzusammensetzung basiert, 2 bis 7 Gew.-% Ruß als farbgebendes Pigment. In einer weiteren, ebenfalls bevorzugten Ausführungsform umfasst die Zusammensetzung, auf der die Acrylatlackzusammensetzung basiert, 15 bis 40 Gew.-%, besonders bevorzugt 22 bis 28 Gew.-% TiO₂ als farbgebendes Pigment.

Bei der Gravierschicht handelt es sich um eine oberhalb der Kontrastschicht angeordnete Schicht, die mit Hilfe eines einzelnen Laserstrahls oder mit Hilfe mehrerer Laserstrahlen beschriftet werden kann. Bei diesem Beschriftungsvorgang wird die Gravierschicht an den Stellen ablatiert, auf die ein Laserstrahl mit entsprechender Energie gerichtet wird. Bei ausreichendem Energieeintrag wird die Gravierschicht lokal vollständig entfernt, so dass sie an diesen Stellen lichtdurchlässig ist. Es ist ebenfalls denkbar, dass die Gravierschicht an einigen Stellen lediglich teilweise ablatiert wird, so dass sich an diesen Stellen ein opakes Erscheinungsbild der Gravierschicht ergibt. Bei der Gravierschicht handelt es sich bevorzugt um eine Lackschicht, die mittels Druckverfahren aufgebracht werden kann. Bevorzugte Beispiele entsprechender Drucklackschichten umfassen Drucklacke auf Basis von elektronenstrahlhärtbaren oder UV-härtbaren Acrylatlacken. In einer alternativen Ausführungsform der Erfindung besteht die Gravierschicht aus einer dünnen Metallschicht. Die Gravierschicht weist bevorzugt eine Dicke von 1 bis 30 µm, bevorzugt 1 bis 20 µm, besonders bevorzugt 1 bis 10 µm auf. Bewegt sich die Dicke der Gravierschicht in diesem Bereich, ist die Bereitstellung einer besonders temperaturbeständigen laserbeschriftbaren Folie möglich. Im Vergleich zur Kontrastschicht, die bevorzugt eine Dicke von 20 bis 300 µm, bevorzugt 40 bis 200 µm, besonders bevorzugt 60 bis 150 µm aufweist, beträgt die Dicke der Gravierschicht bevorzugt beispielsweise 10 % der Dicke der Kontrastschicht oder weniger.

Die Kontrastschicht erfindungsgemäßer Folien umfasst eine gehärtete Acrylatlackzusammensetzung, die auf einer Zusammensetzung umfassend 30 bis 80 Gew.-%, bevorzugt 50 bis 60 Gew.-%, besonders bevorzugt 52 bis 58 Gew.-% eines trifunktionellen Oligomers A, 0 bis 20 Gew.-%, bevorzugt 5 bis 15 Gew.-%, besonders bevorzugt 8 bis 12 Gew.-% eines trifunktionellen Monomers B, 1 bis 30 Gew.-%, bevorzugt 5 bis 15 Gew.-%, besonders bevorzugt 8 bis 12 Gew.-% eines difunktionellen Monomers C sowie 2 bis 40 Gew.-% eines farbgebenden Pigmentes basiert. Die Kontrastschicht erfindungsgemäßer Folien kann bereitgestellt werden, in dem eine Zusammensetzung, umfassend die Komponenten A, B und C sowie das farbgebende Pigment, gehärtet wird. Hierzu wird die Zusammensetzung mittels UV-Strahlung, Elektronenstrahlhärtung (im Folgenden ESH) oder thermisch vernetzt. Bevorzugt erfolgt die Vernetzung mittels ESH.

Die Kontrastschicht erfindungsgemäßer Folien umfasst wenigstens ein farbgebendes Pigment. Farbgebende Pigmente im Sinne der vorliegenden Erfindung umfassen ohne Einschränkung sämtliche farbgebende Pigmente, die als Farbstoffe und/oder Aufheller in Farben und Lacken Anwendung finden. Beispiele farbgebender Pigmente sind das Titandioxid in der Rutilmodifiaktion ("TiO₂", beispielsweise Rutiltypen der Firma Kronos), Farbruße (beispielsweise Printex-Typen der Firma Evonik) oder weitere dem Fachmann bekannte farbgebende Pigmente, wie sie beispielsweise im Lehrbuch der Lacke und Beschichtungen Bd.5 (Hans Kittel und Jürgen Spille, Hirzel Verlag (Stuttgart), 2003) genannt sind. Bevorzugt handelt es sich bei dem farbgebenden Pigment um möglichst witterungsstabile Pigmente. Besonders bevorzugt für die Kontrastschicht ist Titandioxid in der Rutilmodifikation. Wesentlich für die Erfindung ist nicht die Farbe des Pigmentes bzw. der Kontrastschicht für sich, sondern der sich im Vergleich zur Gravierschicht ergebende Farbunterschied bzw. Kontrast. Das erfindungsgemäß verwendete Pigment dient dabei der Einstellung des Kontrastes, der nach der Beschriftung der Folie, d.h. nach Ablation der Gravierschicht mittels Laser zwischen der Kontrastschicht und der Gravierschicht erzeugt wird.

Das trifunktionelle Oligomer A ist ein Oligomer mit drei ungesättigten (Meth)acrylateinheiten pro Molekül, dessen zahlengemitteltes Molekulargewicht Mn (bestimmt mittels GPC, Kalibrierung mit Polystyrol-Standard) bevorzugt zwischen 1000 und 5000 g/mol, bevorzugt zwischen 1400 und 3600 g/mol, bevorzugt zwischen 1800 und 2200 g/mol, besonders bevorzugt zwischen 1900 und 2100 g/mol liegt. Liegt das Molekulargewicht Mn in dem genannten Bereich, hat dies einen positiven Einfluss auf die Langzeit-Temperaturbeständigkeit der gehärteten Acrylatlackzusammensetzung, so dass besonders dimensionsstabile Kontrastschichten erhalten werden können.

In einer bevorzugten Ausführungsform ist das trifunktionelle Oligomer A ausgewählt aus der Gruppe der Polyurethantri(meth)acrylate und Polyestertri(meth)acrylate, von denen Polyurethantri(meth)acrylate besonders bevorzugt sind. Der Ausdruck (Meth)acrylat umfasst Acrylate, Methacrylate und Mischungen hiervon. Bevorzugt handelt es sich bei dem trifunktionellen Oligomer A um ein Polyurethantri(meth)acrylat, besonders bevorzugt um ein Polyurethantriacrylat. Polyurethantri(meth)acrylate sind Oligomere mit jeweils drei ungesättigten (Meth)acrylatgruppen pro Molekül sowie mehreren, d.h. mindestens zwei Urethaneinheiten. Beispiele bevorzugter Polyurethantriacrylate sind die aliphatischen Urethantriacrylate CN9260D75® und CN9278D80® der Firma Sartomer, von denen CN9260D75® besonders bevorzugt ist.

Das trifunktionelle Monomer B enthält drei ungesättigte (Meth)acrylateinheiten pro Molekül und weist in einer bevorzugten Ausführungsform der Erfindung ein Molekulargewicht von 300 bis 1000 g/mol, bevorzugt 350 bis 800 g/mol, bevorzugt 350 bis 600 g/mol, besonders bevorzugt 400 bis 450 g/mol auf. Komponente B wird bevorzugt ausgewählt aus der Gruppe bestehend aus propoxylierten und ethoxylierten Glyceroltri(meth)acrylaten und propoxylierten und ethoxylierten Trimethylolpropanetri(meth)acrylaten der allgemeinen Formel (I) oder Mischungen hieraus: 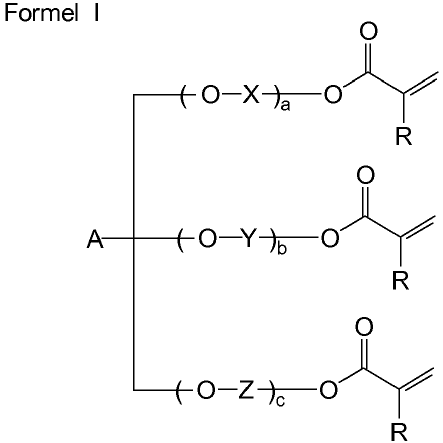 wobei R in Formel I Wasserstoff oder eine Methylgruppe darstellt; A Wasserstoff oder eine Ethylgruppe ist; X, Y und Z jeweils unabhängig voneinander eine Propylen- oder Ethylen-Einheit darstellen; und a, b und c jeweils unabhängig voneinander eine ganze Zahl von 1 bis 4, bevorzugt 1 bis 3 sind, und a+b+c eine Zahl zwischen 3 und 12, bevorzugt von 3 bis 9 darstellt. In einer besonders bevorzugten Ausführungsform der Erfindung sind X, Y und Z Propyleneinheiten. Besonders bevorzugt ist das trifunktionelle Monomer ein propoxyliertes Glyceroltriacrylat. Wird das trifunktionelle Monomer B so ausgewählt, dass das Molekulargewicht in die oben genannten Bereiche und/oder dass das Monomer B unter die oben genannte Formel I fällt, so übt auch die Komponente B einen positiven Einfluss auf die Temperaturbeständigkeit der Kontrastschicht und somit der laserbeschriftbaren Folie aus.

Das difunktionelle Monomer C ist ein Monomer mit zwei ungesättigten Acrylateinheiten pro Molekül. Komponente C weist bevorzugt ein Molekulargewicht von 100 bis 1000 g/mol, bevorzugt 180 bis 350 g/mol, besonders bevorzugt 220 bis 280 g/mol auf und ist bevorzugt ausgewählt aus der Gruppe der Ethylenglykoldiacrylate der allgemeinen Formel (II): 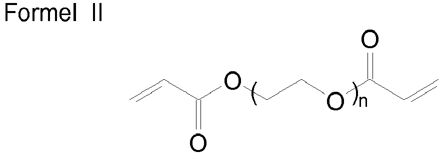 und der Propylenglykoldiacrylate der allgemeinen Formel (III): 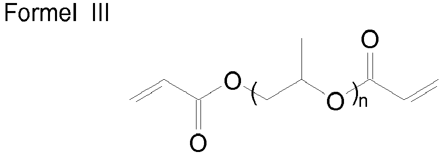 oder Mischungen hieraus, wobei n in den Formeln II und III jeweils unabhängig voneinander eine ganze Zahl von 1 bis 15, bevorzugt von 1 bis 9, besonders bevorzugt von 2 bis 6 und ganz besonders bevorzugt 3 oder 4 darstellen. In einer besonders bevorzugten Ausführungsform der vorliegenden Erfindung ist das difunktionelle Monomer C Triethylenglykoldiacrylat. Wird das difunktionelle Monomer C so ausgewählt, dass das Molekulargewicht in die oben genannten Bereiche und/oder dass das Monomer C unter die oben genannte Formel II oder III fällt, so übt auch die Komponente C einen positiven Einfluss auf die Temperaturbeständigkeit der Kontrastschicht und somit der laserbeschriftbaren Folie aus.

In einer besonders bevorzugten Ausführungsform der Erfindung basiert die Kontrastschicht auf einer Zusammensetzung umfassend wenigstens ein Polyurethantriacrylat, bevorzugt CN9260D75® oder CN9278D80® der Firma Sartomer als Komponente A, ein propoxyliertes Glyceroltriacrylat der oben wiedergegebenen Formel I als Komponente B, Triethylenglykoldiacrylat als Komponente C sowie ein Pigment, beispielsweise Titandioxid in der Rutilmodifikation.

In einer weiteren Ausführungsform der Erfindung weist die erfindungsgemäße laserbeschriftbare Folie eine Klebmassenschicht, bevorzugt eine Haftklebmassenschicht, unterhalb der Kontrastschicht auf. Dies ermöglicht eine vereinfachte Konfektionierung der Folie z.B. in Schneid- oder Stanzprozessen in Etiketten, die ebenfalls Gegenstand der vorliegenden Erfindung sind. Weist die erfindungsgemäße laserbeschriftbare Folie eine Klebmassenschicht auf, so können durch einen Stanz- oder Schneidschritt Etiketten erhalten werden, die bereits als solche direkt auf unterschiedliche Substrate aufgebracht werden können, ohne in konfektionierter Form einen weiteren Beschichtungsschritt erfahren zu müssen. Als Haftklebmassen kommen alle typischen Klebmassen in Frage, die eine hohe Klebkraft und eine hohe Anfassklebrigkeit aufweisen, insbesondere Acrylatklebmassen, z.B. harzmodifizierte Acrylatklebmassen, Naturkautschukklebmassen und Synthesekautschukklebmassen.

Erfindungsgemäße laserbeschriftbare Folien können auf verschiedene Arten hergestellt werden. In einer bevorzugten Ausführungsform betrifft die vorliegende Erfindung jedoch Verfahren zur Herstellung laserbeschriftbarer Etiketten, die die folgenden Schritte umfassen:
- i): Bereitstellen einer Stützfolie;
- ii): Aufbringen der Gravierschicht auf die Stützfolie;
- iii): Aufbringen einer Acrylatlackzusammensetzung umfassend die Komponenten A, optional B, C sowie das farbgebende Pigment auf die Gravierschicht;
- iv): Härten der Acrylatlackzusammensetzung, um die Kontrastschicht zu erhalten;
- v): optional das Aufbringen einer Klebmasse auf die Kontrastschicht sowie das Bedecken der Klebmasse mit einem Trennpapier oder ähnlichem Release-Liner;
- vi): und das Entfernen der Stützfolie.

In diesem Verfahren können als Stützfolie, die auch als Prozessliner bezeichnet werden kann, herkömmliche Folien auf Basis unterschiedlicher Materialien wie Polyethylenterephthalat (PET) verwendet werden. Das Aufbringen von sowohl der Gravierschicht auf die Stützfolie als auch von der Acrylatlackzusammensetzung auf die Gravierschicht kann mittels herkömmlicher Druck- und Beschichtungsverfahren erfolgen. In einer bevorzugten Ausführungsform der Erfindung wird die Acrylatlackzusammensetzung mittels Kommarakel aufgetragen.

Überraschender Weise wurde gefunden, dass laserbeschriftbare Folien, die nach dem beschriebenen Verfahren herstellbar sind und eine Kontrastschicht auf Basis der beschriebenen Acrylatlackzusammensetzung umfassen, eine erhöhte Langzeittemperaturbeständigkeit im Vergleich zu bekannten Folien und Etiketten des Standes der Technik aufweisen. Diese erhöhte Langzeittemperaturbeständigkeit äußert sich in einem unterdrückten Kantenabheben der Folien und Etiketten, die mittels Klebmasse auf ein Substrat aufgebracht wurden, sowie in einer verminderten Neigung zur Rissbildung bei lange anhaltender Temperatureinwirkung im verklebten Zustand auf dem Substrat. Überraschender Weise zeigen erfindungsgemäße Folien und Etiketten bei verbesserter Temperaturbeständigkeit einen weiterhin hervorragenden Manipulationsschutz, da sie trotz ihrer Temperaturstabilität im Falle eines Manipulationsversuches im Bereich der Kontrastschicht brechen, z.B. während eines Ablöseversuches im verklebten Zustand von einem Substrat. Dieses Brechen äußert sich nach außen sichtbar in Form einer deutlich erkennbaren Rissbildung. Im Ergebnis zeigen die erfindungsgemäßen Etiketten lediglich dann Manipulationsversuche an, wenn entsprechende Versuche auch stattgefunden haben.

Im Folgenden wird die Erfindung anhand eines Beispiels näher erläutert. Sofern nicht anders angegeben, sind alle Mengenangaben in den nachfolgenden Beispielen Gewichtsteile bezogen auf die Gesamtzusammensetzung.

### Herstellung der Muster

Zur Herstellung von Mustern laserbeschiftbarer Folien wurde in den folgenden Beispielen 1 bis 4 zunächst eine 50 µm dicke Polyesterfolie als Stützträgerfolie an einem UV-Flexodruckwerk der Firma SMB bei einer Bahngeschwindigkeit von 15 m/min mit Flexocure Gemini (schwarz) der Firma Flint zur Herstellung einer Gravierschicht bedruckt, so dass die Druckhöhe zwischen 2 und 4 µm betrug. Anschließend wurde die so erhaltene Beschichtung zur Herstellung der Gravierschicht unter Verwendung einer Hg-Strahlerröhre des Typs E 70-2 (4)x1 BLK-2-SLC der Firma IST Metz GmbH UV-gehärtet. Die Strahlerleistung der Strahlerröhre betrug 80 W/cm.

Zur Herstellung der Kontrastschicht wurden die in den Beispielen angegeben Rohstoffe in einem Dispermaten (Dissolver CN10 der Firma VMA Getzmann) mit wassergekühltem Dispergierbehälter (Fassungsvolumen 11) und einer 60mm Dissolverscheibe zusammengegeben und bei einer Temperatur von 40 °C für 20 Minuten bei 8000 U/min homogenisiert. Die so erhaltene Zusammensetzung wurde mittels Rakel in einer Schichtdicke von 100 µm auf die Gravierschicht aufgebracht und durch Elektronenstrahlhärtung bei 80 kGy und 240 kV vernetzt, um die Kontrastschicht zu ergeben.

Der so erhaltene Verbund aus Stützträgerfolie / Gravierschicht / Kontrastschicht wurde auf eine einseitig mit einem Releaseliner ausgestattete, 40 µm dicke Acrylathaftklebmasse aufgebracht, bevor die Polyester-Stützträgerfolie abgezogen wurde. Als Haftklebmasse wurde eine harzmodifizierte Acrylatklebmasse verwendet, die zu 80 Gew.-% aus einem Acrylatcopolymer und zu 20 Gew.-% aus Terpenphenolharz bestand. Das Copolymer wurde durch Polymerisation von 47,5 Gew.-% n-Butylacrylat, 47,5 Gew.-% 2-Ethylhexylacrylat, 2 Gew.-% Glycidylmethacrylat und 1 Gew.-% Acrylsäure erhalten.

Die so erhaltene Folie wurde mittels Laserverfahren unter Verwendung eines Nd:YAG Festkörperlasers 50D der Firma Rofin mit einem Testschriftzug und einem Barcode beschriftet und ebenfalls unter Verwendung dieses Lasers in 3 x 8 cm große Etiketten geschnitten.

### Prüfmethoden

Zur Ermittlung der Temperaturbeständigkeit und der Manipulationssicherheit wurden jeweils fünf Etiketten der gemäß den Beispielen 1 bis 4 erhaltenen Muster untersucht. Hierzu wurde wie folgt vorgegangen.

### Temperaturbeständigkeit:

Das Laseretikett wird blasenfrei auf eine 1 mm dicke und flächendeckend mit einem lösungsmittelbasierenden Acrylatlack (Clear Coat) der Firma Kansai Paint (KINO 1210TW-2) lackierte Stahlplatte aufgeklebt. Nach etwa 24 Stunden Wartezeit bei Raumtemperatur wird das Muster für eine Dauer von 2300h bei 150°C eingelagert.

Das Muster wird am Ende der Lagerzeit auf Kantenabheben (das Ablösen der Kanten des Etiketts vom Untergrund in mm - gemessen vom Rand des Etiketts) und auf die Anzahl der Risse im Etikett hin untersucht. Außerdem wird der Schrumpf der Muster gemessen (in % von der ursprünglichen Verklebungsfläche).

Die Ergebnisse werden als Mittelwert von fünf Mustern angegeben und auf einer Skala von 1 bis 6 eingeteilt. Dabei bedeutet ein Wert von
1, dass das Kantenabheben weniger als 0,1 mm und der Schrumpf weniger als 0,5% beträgt; ferner sind keine Risse sichtbar;
2, dass das Kantenabheben weniger als 0,5 mm und der Schrumpf weniger als 2% beträgt; ferner sind keine Risse sichtbar; Kantenabheben, Schrumpf und / oder Rissbildung sind jedoch so stark ausgeprägt, dass ein Wert von "1" nicht erzielt wurde;
3, dass das Kantenabheben weniger als 2,0 mm und der Schrumpf weniger als 5% beträgt; ferner sind maximal 2 Risse sichtbar; Kantenabheben, Schrumpf und / oder Rissbildung sind jedoch so stark ausgeprägt, dass ein Wert von "2" nicht erzielt wurde;
4, dass das Kantenabheben weniger als 5,0 mm und der Schrumpf weniger als 10% beträgt; ferner sind maximal 5 Risse sichtbar; Kantenabheben, Schrumpf und / oder Rissbildung sind jedoch so stark ausgeprägt, dass ein Wert von "3" nicht erzielt wurde;
5, dass sich das Etikett vollständig vom Untergrund ablöst ("vollständiges Kantenabheben") und der Schrumpf 10% oder mehr beträgt; ferner sind bis zu 10 Risse sichtbar;
6, dass sich das Etikett vollständig vom Untergrund ablöst ("vollständiges Kantenabheben") und der Schrumpf 10% oder mehr beträgt; ferner sind mehr als 10 Risse sichtbar.

### Manipulationssicherheit:

Bei der Prüfung auf Manipulationssicherheit ("tamper evidence") wird die Brüchigkeit des Musters nach der blasenfreien Verklebung auf einer 1 mm dicken und flächendeckend mit einem Clear Coat der Firma Kansai Paint (KNIO 1210TW-2) lackierten Stahlplatte untersucht. Dazu wird versucht, das Muster nach einer 24 stündigen Wartezeit nach dem blasenfreien Verkleben auf die Stahlplatte vom Untergrund abzuziehen. Die Manipulationssicherheit des Laserlabelmaterials wird in vier Bewertungsstufen ("1" bis "4") eingestuft. Es wird überprüft mit welchen Hilfsmitteln das Sicherheitsetikett ohne Zerstörung vom Untergrund abgelöst werden kann. Als "Zerstörung" werden in diesem Zusammenhang ein Brechen des Etiketts und eine Rissbildung innerhalb der Kontrastschicht bezeichnet. Dabei bedeutet ein Wert von
4, dass das Etikett zerstörungsfrei mit der Hand ohne zusätzliches Hilfsmittel abgelöst werden kann; die Manipulationssicherheit ist insofern ungenügend;
3, dass das Etikett nicht zerstörungsfrei mit der Hand aber mit Hilfe einer scharfen Metallklinge abgelöst werden kann; die Manipulationssicherheit ist insofern ebenfalls ungenügend;
2, dass das Etikett auch mit Hilfe einer scharfen Metallklinge als alleinigem zusätzlichem Hilfsmittel nicht zerstörungsfrei abgelöst werden kann; ein zerstörungsfreies Ablösen gelingt allerdings unter Verwendung von Isopropanol als Lösungsmittel in Kombination mit einer scharfen Metallklinge; die Manipulationssicherheit wird als ausreichend eingestuft;
1, dass das Etikett auch unter Verwendung von Isopropanol als Lösungsmittel in Kombination mit einer scharfen Metallklinge nicht zerstörungsfrei abgelöst werden kann; in diesem Fall wird die Manipulationssicherheit als gut eingestuft.

### Beispiel 1

| | | |
|---|---|---|
| 60 Teile | Ebecryl 284® | Difunktionelles Urethanacrylat (Oligomer) der Firma Cytec (enthält ca. 12% HDDA), Mₙ 1200 g/mol |
| 4 Teile | Laromer HDDA® | Difunktionelles Acrylat (Reaktivverdünner) der Firma BASF |
| | | Hexandioldiacrylat, Mₙ 226 g/mol |
| 11 Teile | SR272® | Difunktionelles Acrylat (Reaktivverdünner) der Firma Sartomer |
| | | Triethylengylcol Diacrylat, , Mₙ 258 g/mol |
| 25 Teile | Kronos 2160® | Titandioxid |

### Beispiel 2

| | | |
|---|---|---|
| 56Teile | Genomer G4312® | Trifunktionelles Urethanacrylat (Oligomer) der Firma Rahn, Mₙ 1200 g/mol |
| 10Teile | SR 350® | Trifunktionelles Methacrylat (Reaktivverdünner), der Firma Sartomer |
| | | Trimethylolpropan Trimethacrylat, Mₙ 338 g/mol |
| 8 Teile | SR 306® | Difunktionelles Acrylat (Reaktivverdünner) der Firma Sartomer |
| | | Tripropylenglycol Diacrylat, Mₙ 300g/mol |
| 25 Teile | Kronos 2160® | Titandioxid |

### Beispiel 3

| | | |
|---|---|---|
| 70 Teile | PEA 03-849® | Trifunktionelles Polyesteracrylat (Oligomer) der Firma Rahn, Mₙ 1700 g/mol |
| 5 Teile | SR 272® | Difunktionelles Acrylat (Reaktivverdünner), der Firma Sartomer |
| | | Triethylenglycol Diacrylat, Mₙ 258 g/mol |
| 25 Teile | Kronos 2160® | Titandioxid |

### Beispiel 4

| | | |
|---|---|---|
| 55 Teile | CN 9260® | Trifunktionelles Urethanacrylat (Oligomer) der Firma Sartomer, Mₙ 2000 g/mol |
| 10 Teile | SR9020® | Trifunktionelles Acrylat (Reaktivverdünner) der Firma Sartomer |
| | | Propoxyliertes Glyceryl Triacrylat, Mₙ 428 g/mol |
| 10 Teile | SR 272® | Difunktionelles Acrylat (Reaktivverdünner), der Firma Sartomer |
| | | Triethylenglycol Diacrylat, Mₙ 258 g/mol |
| 25 Teile | Kronos 2160® | Titandioxid |

### Ergebnisse

| Testmethode | Beispiel 1 | Beispiel 2 | Beispiel 3 | Beispiel 4 |
|---|---|---|---|---|
| Temperaturbeständigkeit | 4 | 2 | 1 | 1 |
| Manipulationssicherheit | 3 | 2 | 2 | 1 |

Bei den erfindungsgemäßen Mustern (Beispiele 2, 3 und 4) zeigt sich eine hervorragende Temperaturbeständigkeit über lange Zeiträume bei gleichzeitig ausreichender bis guter Manipulationssicherheit. Im Vergleich hierzu führt der Einsatz eines difunktionellen Urethanacrylats als Oligomer zu einer deutlich verschlechterten Temperaturbeständigkeit und einer nicht ausreichenden Manipulationssicherheit (Beispiel 1).

Die Molekulargewichtsbestimmungen der zahlenmittleren Molekulargewichte Mₙ und der gewichtsmittleren Molekulargewichte M_{w} erfolgten mittels Gelpermeationschromatographie (GPC). Als Eluent wurde THF (Tetrahydrofuran) mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁶ mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

## Patentansprüche

1. Laserbeschriftbare Folie, umfassend
- eine Kontrastschicht auf Basis einer gehärteten Acrylatlackzusammensetzung und
- eine oberhalb der Kontrastschicht angeordnete Gravierschicht,
wobei die gehärtete Acrylatlackzusammensetzung auf einer Zusammensetzung umfassend
∘ 30 bis 80 Gew.-% eines trifunktionellen Oligomers A;
∘ 0 bis 20 Gew.-% eines trifunktionellen Monomers B;
∘ 1 bis 30 Gew.-% eines difunktionellen Monomers C;
∘ sowie 2 bis 40 Gew.-% eines farbgebenden Pigmentes basiert.

2. Laserbeschriftbare Folie gemäß Anspruch 1, wobei das trifunktionelle Oligomer A ausgewählt ist aus der Gruppe der Polyurethantri(meth)acrylate und Polyestertri(meth)acrylate.

3. Laserbeschriftbare Folie gemäß einem der Ansprüche 1 oder 2, wobei das trifunktionelle Monomer B ausgewählt ist aus der Gruppe bestehend aus propoxylierten und ethoxylierten Glyceroltri(meth)acrylaten der allgemeinen Formel I oder Mischungen hieraus 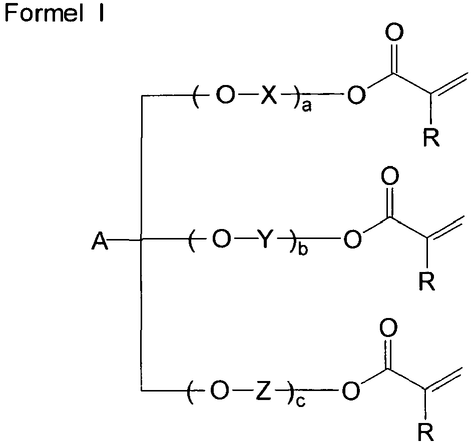 wobei R in Formel I Wasserstoff oder Methyl darstellt; A Wasserstoff oder eine Ethylgruppe ist; X, Y und Z jeweils unabhängig voneinander eine Propylen- oder Ethylen-Einheit darstellen; und a, b und c jeweils unabhängig voneinander eine ganze Zahl von 1 bis 4 sind, und a+b+c eine Zahl zwischen 3 und 12 darstellt.

4. Laserbeschriftbare Folie gemäß einem der vorhergehenden Ansprüche, wobei das difunktionelle Monomer C ausgewählt ist aus der Gruppe der Ethylenglycoldiacrylate der allgemeinen Formel (II) 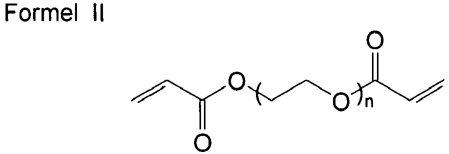 und der Propylenglycoldiacrylate der allgemeinen Formel (III) 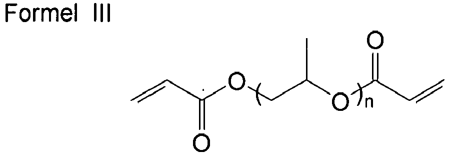 oder Mischungen hieraus,
wobei n in den Formeln (II) und (III) jeweils unabhängig voneinander eine ganze Zahl zwischen 1 und 15 darstellt.

5. Laserbeschriftbare Folie gemäß einem der vorhergehenden Ansprüche, wobei die Zusammensetzung, auf der die Acrylatlackzusammensetzung basiert, 50 bis 60 Gew.-% des trifunktionellen Oligomers A, 5 bis 15 Gew.-% des trifunktionellen Monomers B sowie 5 bis 15 Gew.-% des difunktionellen Monomers C umfasst.

6. Laserbeschriftbare Folie gemäß einem der vorhergehenden Ansprüche, **dadurch gekennzeichnet, dass** unterhalb der Kontrastschicht eine Klebmassenschicht angeordnet ist.

7. Laserbeschriftbare Folie gemäß einem der Ansprüche 1 bis 6, **dadurch gekennzeichnet, dass** die Folie in Form eines Etikettes vorliegt.

8. Laserbeschriftbare Folie gemäß einem der Ansprüche 1 bis 7, wobei das trifunktionelle Oligomer A ein Oligomer mit drei ungesättigten (Meth)acrylateinheiten und einem zahlengemittelten Molekulargewicht, Mn, von 1000 bis 5000 g/mol ist; wobei das trifunktionelle Monomer B ein Monomer mit drei ungesättigten (Meth)acrylateinheiten und einem Molekulargewicht von 300 bis 1000 g/mol ist; und wobei das difunktionelle Monomer C ein Monomer mit zwei ungesättigten Acrylateinheiten pro Molekül und einem Molekulargewicht von 100 bis 1000 g/mol ist.

9. Verfahren zur Herstellung einer laserbeschriftbaren Folie, umfassend die folgenden Schritte:
i) Bereitstellen einer Stützfolie;
ii) Aufbringen einer Gravierschicht auf die Stützfolie;
iii) Aufbringen einer Acrylatlackzusammensetzung auf die Gravierschicht;
, wobei die Acrylatlackzusammensetzung auf einer Zusammensetzung umfasend 30 bis 80 Gew.-% eines trifunktionellen Oligomers A, 0 bis 20 Gew.-% eines trifunktionellen Monomers B; 1 bis 30 Gew.-% eines difunktionellen Monomers C; sowie 2 bis 40 Gew.-% eines farbgebenden Pigmentes basiert
iv) Härten der Acrylatlackzusammensetzung, um eine Kontrastschicht zu erhalten;
v) optional das Aufbringen einer Klebmasse auf die Kontrastschicht sowie das Bedecken der Klebmasse mit einem Trennpapier oder Release-Liner;
vi) und das Entfernen der Stützfolie.

## Claims

1. Laser-inscribable film, comprising
- a contrast layer based on a cured acrylate coating composition and
- arranged above the contrast layer, an engraving layer,
where the cured acrylate coating composition is based on a composition comprising
∘ from 30 to 80% by weight of a trifunctional oligomer A;
∘ from 0 to 20% by weight of a trifunctional monomer B;
∘ from 1 to 30% by weight of a difunctional monomer C;
∘ and from 2 to 40% by weight of a colorant pigment.

2. Laser-inscribable film according to Claim 1, where the trifunctional oligomer A is one selected from the group of the polyurethane tri(meth)acrylates and polyester tri(meth)acrylates.

3. Laser-inscribable film according to Claim 1 or 2, where the trifunctional monomer B is one selected from the group consisting of propoxylated and ethoxylated glycerol tri(meth)acrylates of the general formula I or mixtures of these 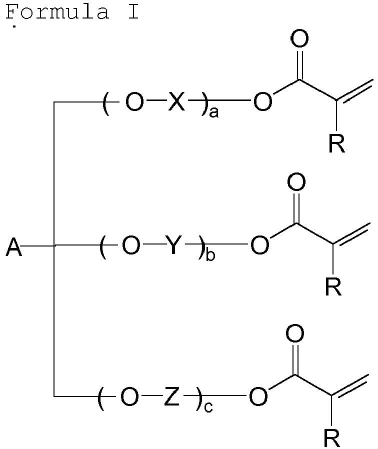 where R in formula I is hydrogen or methyl; A is hydrogen or an ethyl group; X, Y and Z are respectively mutually independently a propylene unit or ethylene unit; and a, b and c are respectively mutually independently an integer from 1 to 4, and a+b+c is a number from 3 to 12.

4. Laser-inscribable film according to any of the preceding claims, where the difunctional monomer C is one selected from the group of the ethylene glycol diacrylates of the general formula (II) 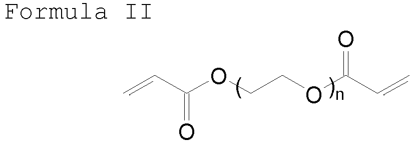 and the propylene glycol diacrylates of the general formula (III) 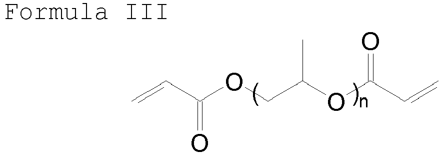 or mixtures of these,
where n in the formulae (II) and (III) is respectively mutually independently an integer from 1 to 15.

5. Laser-inscribable film according to any of the preceding claims, where the composition on which the acrylate coating composition is based comprises from 50 to 60% by weight of the trifunctional oligomer A, from 5 to 15% by weight of the trifunctional monomer B, and also from 5 to 15% by weight of the difunctional monomer C.

6. Laser-inscribable film according to any of the preceding claims, **characterized in that** an adhesive-mass layer has been arranged below the contrast layer.

7. Laser-inscribable film according to any of Claims 1 to 6, **characterized in that** the film takes the form of a label.

8. Laser-inscribable film according to any of Claims 1 to 7, where the trifunctional oligomer A is an oligomer having three unsaturated (meth)acrylate units and having a number-average molar mass, Mn, of from 1000 to 5000 g/mol; where the trifunctional monomer B is a monomer having three unsaturated (meth)acrylate units and a molar mass of from 300 to 1000 g/mol; and where the difunctional monomer C is a monomer having two unsaturated acrylate units per molecule and a molar mass of from 100 to 1000 g/mol.

9. Process for producing a laser-inscribable film, comprising the following steps:
i) providing a supportive film;
ii) applying an engraving layer to the supportive film;
iii) applying an acrylate coating composition to the engraving layer, where the acrylate coating composition is based on a composition comprising from 30 to 80% by weight of a trifunctional oligomer A, from 0 to 20% by weight of a trifunctional monomer B; from 1 to 30% by weight of a difunctional monomer C; and from 2 to 40% by weight of a colorant pigment;
iv) curing the acrylate coating composition in order to obtain a contrast layer;
v) optionally applying an adhesive composition to the contrast layer, and also covering the adhesive vi) composition with a release paper or release liner;
vi) and removing the supportive film.

## Revendications

1. Feuille inscriptible au laser, comprenant
- une couche de contraste à base d'une composition durcie de laque d'acrylate et
- une couche de gravure disposée au-dessus de la couche de contraste,
la composition durcie de laque d'acrylate étant à base d'une composition comprenant
- 30 à 80% en poids d'un oligomère A trifonctionnel ;
- 0 à 20% en poids d'un monomère B trifonctionnel ;
- 1 à 30% en poids d'un monomère C difonctionnel ;
- ainsi que 2 à 40% en poids d'un pigment colorant.

2. Feuille inscriptible au laser selon la revendication 1, l'oligomère A trifonctionnel étant choisi dans le groupe formé par les polyuréthane-tri(méth)acrylates et les polyester-tri(méth)acrylates.

3. Feuille inscriptible au laser selon l'une quelconque des revendications 1 ou 2, le monomère B trifonctionnel étant choisi dans le groupe constitué par les tri(méth)acrylates de glycérol propoxylés et éthoxylés de formule générale I ou leurs mélanges 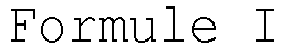 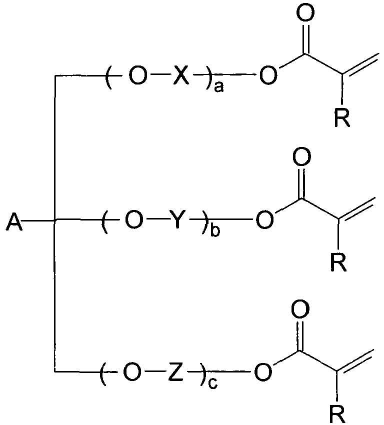 R dans la formule I représentant hydrogène ou méthyle ; A représentant hydrogène ou un groupe éthyle ; X, Y et Z représentant, à chaque fois indépendamment l'un de l'autre, une unité propylène ou éthylène ; et a, b et c représentant, à chaque fois indépendamment les uns des autres, un nombre entier de 1 à 4 et a + b + c représentant un nombre entre 3 et 12.

4. Feuille inscriptible au laser selon l'une quelconque des revendications précédentes, le monomère C difonctionnel étant choisi dans le groupe formé par les diacrylates d'éthylèneglycol de formule générale (II) 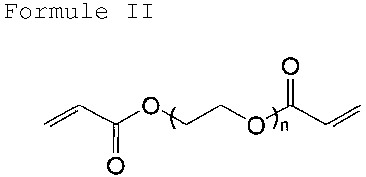 et les diacrylates de propylèneglycol de formule générale (III) 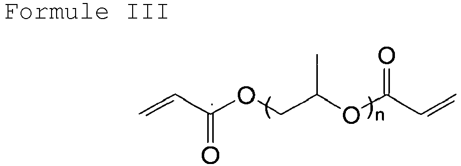 ou leurs mélanges,
n dans les formules (II) et (III) représentant à chaque fois, indépendamment, un nombre entier entre 1 et 15.

5. Feuille inscriptible au laser selon l'une quelconque des revendications précédentes, la composition sur laquelle la composition de laque d'acrylate est basée comprenant 50 à 60% en poids de l'oligomère A trifonctionnel, 5 à 15% en poids du monomère B trifonctionnel ainsi que 5 à 15% en poids du monomère C difonctionnel.

6. Feuille inscriptible au laser selon l'une quelconque des revendications précédentes, **caractérisée en ce qu'**une couche de masse adhésive est disposée sous la couche de contraste.

7. Feuille inscriptible au laser selon l'une quelconque des revendications 1 à 6, **caractérisée en ce que** la feuille se trouve sous forme d'une étiquette.

8. Feuille inscriptible au laser selon l'une quelconque des revendications 1 à 7, l'oligomère A trifonctionnel étant un oligomère présentant trois unités (méth) acrylate insaturées et un poids moléculaire numérique moyen, Mn, de 1000 à 5000 g/mole ; le monomère B trifonctionnel étant un monomère présentant trois unités (méth)acrylate insaturées et un poids moléculaire de 300 à 1000 g/mole ; et le monomère C difonctionnel étant un monomère présentant deux unités d'acrylate insaturées par molécule et un poids moléculaire de 100 à 1000 g/mole.

9. Procédé pour la fabrication d'une feuille inscriptible au laser, comprenant les étapes suivantes, consistant à :
i) mettre à disposition une feuille support ;
ii) appliquer une couche de gravure sur la feuille support ;
iii) appliquer une composition de laque d'acrylate sur la feuille de gravure ;
la composition de laque d'acrylate étant à base d'une composition comprenant 30 à 80% en poids d'un oligomère A trifonctionnel, 0 à 20% en poids d'un monomère B trifonctionnel ; 1 à 30% en poids d'un monomère C difonctionnel ; ainsi que 2 à 40% en poids d'un pigment colorant ;
iv) durcir la composition de laque d'acrylate pour obtenir une couche de contraste ;
v) éventuellement appliquer une masse adhésive sur la couche de contraste ainsi que recouvrir la masse adhésive par un papier de séparation ou un revêtement antiadhésif ;
vi) et éliminer la feuille support.
